# EUROPÄISCHE PATENTSCHRIFT

(11) **EP 1 684 936 B1**
(45) Veröffentlichungstag und Bekanntmachung des Hinweises auf die Patenterteilung: **20.08.2008**
(21) Anmeldenummer: 04790038.6
(22) Anmeldetag: 23.10.2004
(51) Int. Cl.: B23K 26/38, B23K 26/03

(54) **VERFAHREN ZUR PRÜFUNG EINER BOHRUNG**
METHOD FOR EXAMINING A BOREHOLE
PROCEDE DE CONTROLE D'UN ALESAGE

(30) Priorität: 06.11.2003 DE 10351874
(43) Veröffentlichungstag der Anmeldung: 02.08.2006
(73) Patentinhaber: MTU Aero Engines GmbH, 80995 München (DE)
(72) Erfinder: BAYER, Erwin, 85221 Dachau (DE); GEISEL, Mark, 81247 München (DE); HERZINGER, Thomas, 80639 München (DE)
(86) Internationale Anmeldenummer: PCT/DE2004/002368
(87) Internationale Veröffentlichungsnummer: WO 2005/044507

(56) Entgegenhaltungen:
- EP-A- 0 364 914
- EP-A- 0 937 532
- WO-A-86/02301

## Beschreibung

Die Erfindung betrifft ein Verfahren zur Prüfung einer Bohrung gemäß dem Oberbegriff des Patentanspruchs 1.

Das Laserimpulsbohren wird angewandt, um Bohrungen geringen Durchmessers bei*spielsweise an Hohlwerkstücken zu fertigen. Insbesondere Turbinenschaufeln weisen eine* Vielzahl von feinen Kühlluftbohrungen auf, die sich mittels dieses Verfahrens automatisiert mit hoher Positioniergenauigkeit fertigen lassen.

Diese Bohrungen müssen jedoch hinsichtlich ihres Durchmessers genaue Toleranzen einhalten, um im Betrieb den erforderlichen Kühlluftdurchsatz zu erzielen. Deshalb muss die Maßhaltigkeit der gefertigten Bohrungen überprüft werden.

Außerdem muss sichergestellt werden, dass die Bohrung einerseits fertiggestellt wird, also nicht nur ein Sackloch gefertigt wird, und dass andererseits die Laserimpulse nach der Fertigstellung einer Bohrung nicht fortgesetzt werden und evtl. dahinter liegende Wandungsbereiche beschädigen.

Deshalb wurden bereits verschiedene Verfahren zur automatisierten Durchschuss- und Durchmesserkennung vorgeschlagen, welche anhand von Veränderungen spezifischer Merkmale des Prozessleuchtens während des Laserimpulsbohrens in unterschiedlicher Weise auf den Durchschusszeitpunkt und den Bohrungsdurchmesser schließen, vgl. DE 38 35 980 A . Die Erfahrung zeigt jedoch, dass auch bei Anwendung derartiger Prüfverfahren noch Bohrungsfehler auftreten, die bei hohen Qualitätsanforderungen wie sie insbesondere in der Luft- und Raumfahrt auftreten, nicht toleriert werden können.

Die Aufgabe der vorliegenden Erfindung besteht daher darin, ein Prüfverfahren anzugeben, welches Bohrungsfehler sicherer erkennt.

Diese Aufgabe wird von einem Verfahren mit den Merkmalen des Oberbegriffs von Patentanspruch 1 durch dessen kennzeichnende Merkmale gelöst. Vorteilhafte Ausgestaltungen sind in den Unteransprüchen angegeben.

Gemäß der Erfindung werden zur Prüfung einer Bohrung, die mittels Laserimpulsen in ein Werkstück eingebracht wird, charakteristische Signale aus dem Bereich der Bohrung mittels eines Sensors empfangen und mit Sollwerten verglichen werden, wobei nur Signale berücksichtigt werden, die in einem charakteristischen Zeitintervall nach einem Laserimpuls empfangen werden.

Im Gegensatz zu Verfahren nach dem Stand der Technik, die das Prozessleuchten während der Dauer eines Laserimpulses untersuchen, erfolgt die erfindungsgemäße Überprüfung ausschließlich anhand von Signalen, die nach einem Laserimpuls empfangen werden. Dadurch werden Bohrungsfehler wesentlich sicherer erkannt, da während und auch noch kurz nach Erlöschen des Prozessleuchtens noch Teile des Werkstückmaterials in schmelzflüssiger Phase vorliegen. Verschiedene physikalische Phänomene, insbesondere die Minimierung der Grenzflächenenergie, können dazu führen, dass die schmelzflüssige Phase in die Bohrung gelangt, dort erstarrt und einen teilweisen oder vollständigen Verschluss der Bohrung zur Folge hat. Hochgeschwindigkeitsaufnahmen mit einer Videokamera belegen das Auftreten solcher Bohrungsfehler.

Derartige Bohrungsfehler können mit Verfahren, welche das Prozessleuchten untersuchen, nicht festgestellt werden, wohl aber mit dem erfindungsgemäßen Verfahren, da es erst nach dem Ablauf dieser physikalischen Phänomene mit der Überprüfung beginnt.

Der Vergleich der empfangenen Signale mit den Sollwerten kann nach bekannten Verfahren, z.B. gemäß DE 38 35 980 A1 , erfolgen.

In einer vorteilhaften Ausgestaltung wird daher das charakteristische Zeitintervall in Abhängigkeit von Materialeigenschaften des Werkstücks und von Prozessparametern des Laserimpulses definiert. Dabei sind für Beginn und Ende des Zeitintervalls jeweils verschiedene Zeitpunkte möglich: Der absolut früheste sinnvolle Zeitpunkt für den Beginn ist der, zu dem zumindest eine dünne Haut der Bohrungswandung wieder erstarrt ist, vorzuziehen ist die Erstarrung des gesamten aufgeschmolzenen Materials, denkbar ist auch danach noch für einen kurzen Zeitraum zu warten. Der früheste Zeitpunkt für das Ende des Zeitintervalls ist durch die minimale Länge des Zeitintervalls gegeben, welches benötigt wird, um eine ausreichende Menge an Signaldaten zu empfangen. Der späteste Zeitpunkt für das Ende ist der Beginn eines nachfolgenden Laserimpulses.

Die jeweiligen Zeitpunkte können empirisch oder mittels Simulationen nach bekannten Verfahren ermittelt werden.

In einer vorteilhaften Ausgestaltung der Erfindung werden
Signale optischer und/oder thermischer Art empfangen,
die aus dem Bereich der Bohrung emittiert oder reflektiert werden. Der Vorteil dieser Ausgestaltung, besteht darin, das aus derartigen Daten besonders einfach nach bekannten Verfahren auf Bohrungsfehler geschlossenen werden kann. Denkbar sind allerdings auch akustische Signale, da sich die akustischen Eigenschaften einer ideal kreisrunden Bohrung von der einer fehlerhaften Bohrung signifikant unterscheiden.

Besonders vorteilhaft ist die Verwendung einer CCD-Kanera für den Empfang der Signale. Derartige Kameras sind für den optisch und thermischen (IR) Bereich verfügbar und liefern bei minimalem Handhabungsaufwand eine gegenüber optischen oder thermischen Punktsensoren vielfach größere Datenmenge. Aber auch andere elektronische Kameras sind geeignet, z.B. eine CMOS-Kamera.

In einer weiteren vorteilhaften Ausgestaltung der Erfindung wird ab Beginn des Zeitintervalls ein Messsignal optischer und/oder thermischer Art in Richtung auf den Bereich der Bohrung emittiert. Dadurch ist man nicht mehr auf den Empfang von Signalen beschränkt, die noch von dem Energieeintrag durch den vorhergehendem Laserimpuls resultieren, d.h. optische und/oder thermische Strahlung der bereits erstarrten aber erst noch glühenden, da nn noch heißen bis warmen Bohrungswand.

Das Messsignal kann von dem Bohrungslaser oder einem anderen Emitter emittiert werden. Entscheidend ist, dass der Energieeintrag in die Bohrung so gering bleibt, dass das Wandungsmaterial der Bohrung nicht erneut aufschmilzt.

Als besonders vorteilhaft erweist sich das erfindungsgemäße Verfahren bei der Prüfung hinsichtlich des Durchschusses durch die Werkstückwandung und/oder Abweichungen von einer vorgegebenen Bohrungsgeometrie, insbesondere bei Turbinenschaufeln, da dort besonders hohe Qualitätsanforderungen bestehen, die von Verfahren nach dem Stand der Technik nicht befriedigend erfüllt werden können.

Nachfolgend wird das erfindungsgemäße Verfahren anhand von zwei Ausführungsbeispielen näher erläutert:

In einem ersten Ausführungsbeispiel wird zunächst ein für ein gegebenes Werkstück und gegebene Laserparameter geeignetes charakteristisches Zeitintervall empirisch bestimmt. Dazu wird zunächst etwas Werkstückmaterial geschmolzen und danach während des Übergangs von der schmelzflüssigen zur festen Phase mittels einer IR-CCD-Kamera beobachtet, um charakteristische IR-Signale für den Phasenübergang zu ermitteln. Danach erfolgt eine kontinuierliche Beobachtung einer Laserbohrung mittels dieser IR-CCD-Kamera. Zu einem Zeitpunkt, zu dem sich bereits ein relatives Gleichgewicht zwischen Energiezufuhr durch die Laserimpulse und Energieabfuhr über Wärmetransport durch Bohrungswand und Luft eingestellt hat, wird der zeitliche Verlauf der Bohrungsabkühlung direkt nach dem Ende eines Laserimpulses beginnend beobachtet. Diese Beobachtung wird mehrmals wiederholt und jeweils wird der Zeitpunkt bestimmt, zu dem das charakteristische Signal des Phasenübergangs an signifikanten Stellen der Bohrung erreicht wird. Diese Zeiten werden gemittelt. Der Mittelwert liefert ein bewährtes Maß für den Anfang des charakteristischen Zeitintervalls für den gesamten Zeitraum der Laserbohrung, da davon ausgegangen wird, dass die Abkühlung zu Beginn der Bohrung, also vor Erreichen des relativen Gleichgewichts, aufgrund der noch kalten Bohrungsumgebung schneller erfolgt. Als Ende des charakteristischen Zeitintervalls wird der Beginn des neuen Laserimpulses gewählt. Somit erhält man empirisch ein definiertes Zeitintervall beginnend zu einem Zeitpunkt a nach dem Ende eines vorgehenden Laserimpulses und endend zu einem Zeitpunkt b zu Beginn eines nachfolgenden Laserimpulses.

Nachdem so ein geeignetes charakteristisches Zeitintervall definiert ist, kann die eigentliche Fertigungsüberwachung einer Turbinenschaufel erfolgen. Dazu werden während des Fertigungsprozesses jeder Bohrung die IR-Signale der IR-CCD-Kamera, die während dem charakteristischen Zeitintervall jeweils nach einem Laserimpuls empfangen werden, mit *vorher festgelegten Sollwerten verglichen werden.* Der Vergleich erfolgt nach bekannten Verfahren aus dem Stand der Technik, beispielsweise gemäß DE 38 35 980 A1.

In diesem ersten Ausführungsbeispiel wird mittels der aus dem Bereich der Bohrung emittierten und von der IR-CCD-Kamera empfangenen IR-Strahlung ein komplettes IR-Abbild der Bohrung kontinuierlich aufgenommen und zur Bestimmung des Durchschusses durch die Werkstückwandung und von Abweichungen von einer vorgegebenen Bohrungsgeometrie verwendet.

Gemäß einem zweiten Ausführungsbeispiel wird zu Beginn des charakteristischen Zeitintervalls ein optisches Messsignal in Richtung auf den Bereich der Bohrung emittiert, dort absorbiert und in Form von IR-Strahlung wieder emittiert. Dieses zusätzliche Messsignal erhöht die Messgenauigkeit. Allerdings muss darauf geachtet werden, dass die zusätzlich eingebrachte Energie nicht ein erneutes Aufschmelzen der Bohrungswandung bewirkt und so die Bohrung beschädigt. Das optische Messsignal kann auf einfache Weise mittels des Bohrlasers (durch Verkürzung der Pulsdauer und oder Intensität) erzeugt werden, aber auch durch andere Emitter, beispielsweise ein Stroboskop oder eine mittels Chopper regelmäßig unterbrochene kontinuierliche Beleuchtung. Wesentlich ist dabei die Synchronisation von Laserbohrimpulsen und Meßsignalen, deren gleichmäßiger Abstand gewährleistet werden muss, um Bohrungsfehler infolge ungleichmäßiger Erwärmung auszuschließen.

Das erfindungsgemäße Verfahren erweisen sich in den Ausführungsformen der vorstehend beschriebenen Beispiele als besonders geeignet für die schnelle und einfache Prüfung der Laserbohrungen in Turbinenschaufeln, da dort besonders hohe Qualitätsanforderungen bestehen, die von Verfahren nach dem nach dem Stand der Technik nicht befriedigend erfüllt werden können.

Die Erfindung ist nicht nur auf die zuvor geschilderten Ausführungsbeispiele beschränkt, sondern vielmehr auf weitere übertragbar.

So kann mittels dem Verfahren nicht nur der Durchtritt und/ oder die Bohrungsgeometrie überwacht werden, sondern beispielsweise auch die aktuelle Bohrlochtiefe.

Des weiteren sind für eine Reihe von Anwendungen, für welche die Qualitätsanforderungen etwas geringer sind, auch Messungen mittels optischer/thermischer/ akustischer Punktsensoren anstatt einer CCD-Kamera oder CMOS-Kamera ausreichend.

## Patentansprüche

1. Verfahren zur Prüfung einer Bohrung, die mittels Laserimpulsen in ein Werkstück eingebracht wird, wobei charakteristische Signale aus dem Bereich der Bohrung mittels eines Sensors empfangen und mit Sollwerten verglichen werden und dabei nur Signale berücksichtigt werden, die in einem charakteristischen Zeitintervall nach einem Laserimpuls empfangen werden, **dadurch gekennzeichnet, dass** das charakteristische Zeitintervall in Abhängigkeit von Materialeigenschaften des Werkstücks und von Prozessparametern des Laserimpulses derart definiert wird, dass das Zeitintervall frühestens beginnt, sobald nach dem Aufschmelzen durch einen vorangegangenen Laserimpuls zumindest eine dünne Haut der Bohrungswand wieder erstarrt ist, und dass das Zeitintervall spätestens endet, sobald ein neuer Laserimpuls folgt.

2. Verfahren nach Anspruch 1, **dadurch gekennzeichnet, dass** das Zeitintervall beginnt, sobald das gesamte aufgeschmolzene Material wieder erstarrt ist, und dass die Länge des Zeitintervalls so gewählt wird, dass eine ausreichende Menge an Signaldaten empfangen werden kann.

3. Verfahren nach einem der vorhergehenden Ansprüche, **dadurch gekennzeichnet, dass** die Signale mittels einer CCD-Kamera oder einer CMOS-Kamera empfangen werden.

4. Verfahren nach einem der vorhergehenden Ansprüche, **dadurch gekennzeichnet, dass** ab Beginn des Zeitintervalls ein Messsignal optischer und/oder thermischer Art in Richtung auf den Bereich der Bohrung emittiert wird, insbesondere ein vom Bohrungslaser selbst emittiertes Messsignal.

5. Verfahren nach einem der vorhergehenden Ansprüche, **dadurch gekennzeichnet, dass** die Prüfung hinsichtlich des Durchschusses durch die Werkstückwandung und/oder der Bohrlochtiefe und/oder Abweichungen von einer vorgegebenen Bohrungsgeometrie erfolgt.

## Claims

1. Method for examining a borehole produced by laser pulses in a workpiece, such that characteristic signals are received from a sensor in the region of the hole and are compared with nominal values, only those signals being taken into account which are received within a characteristic time interval after a laser pulse, **characterised in that** the characteristic time interval is defined, as a function of material properties of the workpiece and process parameters of the laser pulse, in such manner that the said time interval begins at the earliest as soon as at least a thin layer on the wall of the hole has re-solidified after being melted by a previous laser pulse, and the time interval ends at the latest as soon as a new laser pulse follows.

2. Method according to Claim 1, **characterised in that** the time interval begins as soon as all the melted material has re-solidified, and the length of the time interval is chosen such that a sufficient quantity of signal data can be captured.

3. Method according to either of the preceding claims, **characterised in that** the signals are captured by means of a CCD camera or a CMOS camera.

4. Method according to any of the preceding claims, **characterised in that** from the beginning of the time interval a measurement signal of optical and/or thermal type is emitted in the direction of the hole area, in particular a measurement signal emitted by the drilling laser itself.

5. Method according to any of the preceding claims, **characterised in that** the examination carried out relates to penetration through the wall of the workpiece and/or hole depth and/or deviation from a specified hole geometry.

## Revendications

1. Procédé de contrôle d'un alésage qui est réalisé au moyen d'impulsions laser dans une pièce à usiner, des signaux caractéristiques de la zone de l'alésage étant reçus au moyen d'un capteur et étant comparés à des valeurs de consigne et seuls étant pris en considération des signaux qui sont reçus dans un intervalle de temps caractéristique après une impulsion laser, **caractérisé en ce que** l'intervalle de temps caractéristique est défini en fonction des propriétés de matière de la pièce à usiner et des paramètres de processus de l'impulsion laser de telle sorte que l'intervalle de temps commence au plus tôt dès qu'au moins une peau mince de la paroi d'alésage est solidifiée de nouveau après la fusion par une impulsion laser précédente, et **en ce que** l'intervalle de temps se termine au plus tard dès qu'une nouvelle impulsion laser suit.

2. Procédé selon la revendication 1, **caractérisé en ce que** l'intervalle de temps commence dès que toute la matière fondue est solidifiée de nouveau, et **en ce que** la longueur de l'intervalle de temps est choisie de telle sorte qu'une quantité suffisante de données de signal puisse être reçue.

3. Procédé selon l'une quelconque des revendications précédentes, **caractérisé en ce que** les signaux sont reçus au moyen d'une caméra CCD ou d'une caméra CMOS.

4. Procédé selon l'une quelconque des revendications précédentes, **caractérisé en ce qu'**au début de l'intervalle de temps, un signal de mesure de type optique et/ou thermique est émis dans la direction de la zone de l'alésage, en particulier un signal de mesure émis par le laser d'alésage lui-même.

5. Procédé selon l'une quelconque des revendications précédentes, **caractérisé en ce que** le contrôle en ce qui concerne la trame est effectué au travers de la paroi de la pièce à usiner et/ou la profondeur du trou percé et/ou par des écarts par rapport à une géométrie d'alésage prescrite.
